# EUROPEAN PATENT APPLICATION

(11) **EP 4 620 613 A1**
(43) Date of publication of application: **24.09.2025**
(21) Application number: 23891307.3
(22) Date of filing: 25.10.2023
(51) Int. Cl.: B23P 21/00, F16D 3/20, F16D 3/2245

(54) **CONSTANT-VELOCITY UNIVERSAL JOINT ASSEMBLING DEVICE AND ASSEMBLING METHOD**

(30) Priority: 15.11.2022 JP 2022182536
(71) Applicant: NTN Corporation, Osaka-shi Osaka 530-0005 (JP)
(72) Inventor: NAKATSUKA, Shiro, Iwata-shi Shizuoka 438-8510 (JP); OGATA, Yuki, Iwata-shi Shizuoka 438-8510 (JP); OKAMOTO, Junichi, Iwata-shi Shizuoka 438-8510 (JP)
(74) Representative: Grünecker Patent- und Rechtsanwälte PartG mbB
(86) International application number: PCT/JP2023/038511
(87) International publication number: WO 2024/106152

(57) **Abstract**

Provided is an assembling device including a phase matching device configured to perform phase matching (20) on a cassette (11), which is formed of an inner joint member (3) and a cage (5) fit to each other so as to be rotatable relative to each other about a center axis (Oi) of the inner joint member (3), to match circumferential positions of an inner track groove (9) of the inner joint member (3) and a pocket (10) of the cage (5). The phase matching device (20) includes a pair of moving bodies (23) configured to synchronously move in directions opposite to each other, and each of the moving bodies (23) is configured to perform slide movement along a direction orthogonal to an axis-parallel plane (P) including the center axis (Oi) as a reference, under a state in which a distal end portion (protrusion (24) formed thereon) of each of the moving bodies has been inserted in the pocket (10).

## Description

### Technical Field

The present invention relates to an assembling device and an assembling method for a constant velocity universal joint.

### Background Art

A constant velocity universal joint has a structure that two shafts of a drive shaft and a driven shaft are coupled to each other and that torque can be transmitted at constant velocity even when the two shafts coupled to each other are angularly displaced relative to each other. The constant velocity universal joint may be of a fixed type in which only relative angular displacement of the two shafts is allowed and may be of a plunging type in which relative angular displacement and axial displacement of the two shafts are allowed. A constant velocity universal joint of a Rzeppa type (also referred as "Birfield type") (BJ), which is a type of the fixed type constant velocity universal joint, includes: an outer joint member having a plurality of outer track grooves extending in an axial direction on a spherical inner peripheral surface; an inner joint member having a plurality of inner track grooves extending in an axial direction on a spherical outer peripheral surface; a plurality of balls disposed in a freely rolling manner between pairs of the outer track grooves and the inner track grooves; and a cage, which has a spherical outer peripheral surface that fits to the spherical inner peripheral surface of the outer joint member and a spherical inner peripheral surface that fits to the spherical outer peripheral surface of the inner joint member, and in which a plurality of pockets that respectively house the balls are provided at intervals in a circumferential direction.

The Rzeppa type constant velocity universal joint requires ingenuity in incorporating joint internal components (inner joint member, cage, and balls) to an inner periphery of the outer joint member, because a cup portion of the outer joint member that houses the joint internal components has an undercut shape (spherical inner peripheral surface) in which an inner diameter of the cup portion is gradually reduced toward one end opening. For example, in Patent Literature 1 below, it is described that the Rzeppa type constant velocity universal joint is automatically assembled by sequentially performing the following first to third steps.
- First step: A step of performing phase matching on a cassette, which is formed of an inner joint member and a cage fit to each other so as to be rotatable relative to each other about a center axis of the inner joint member, to match circumferential positions of an inner track groove and a pocket, and then inserting a ball (reference ball) into one pocket.
- Second step: A step of incorporating the cassette having the reference ball inserted in one pocket to an inner periphery of an outer ring, and then fitting the reference ball between a pair of an outer track groove and an inner track groove.
- Third step: A step of inserting balls into all of the remaining pockets in predetermined order.

In Patent Literature 1, among six ball pockets in total formed in the cage, a set (two) of pockets opposed to each other across the center of the cage are each formed as a "long pocket", and the other four of the pockets are each formed as a "short pocket" having a circumferential length (opening dimension in a circumferential direction) shorter than that of the long pocket. Then, in the first step described above, one reference ball is inserted into one of the four short pockets in total. Thus, the phase matching of the inner joint member (inner track grooves) and the cage (pockets) performed in the first step is accomplished by fitting protrusions, which are respectively provided to a pair of arms nipping (the cage forming) the cassette in a radial direction, to the long pockets of the cage. In this way, when the protrusions described above are fit to the long pockets of the cage, the short pocket subjected to the insertion of the reference ball is arranged so as to be opposed to a ball supply opening of a ball insertion machine (FIG. 8 of Patent Literature 1).

### Citation List

Patent Literature: JP 6-15885 B2

### Summary of Invention

### Technical Problem

In the related-art assembling device and assembling method described above, in order to efficiently and precisely assemble the constant velocity universal joint, for example, when the cassette is nipped by the pair of arms in the radial direction in the first step, the protrusions provided to the arms are required to be fit smoothly to the long pockets of the cage. In order to address the foregoing, for example, when the protrusion is formed to be smaller than the long pocket, the protrusion may fit to the short pocket when a circumferential length difference between the long pocket and the short pocket is small, and hence the reference ball may not be able to be inserted into the predetermined pocket. In addition, when a large clearance is formed between the long pocket and the protrusion fit to the long pocket is large, phase matching of the inner joint member and the cage cannot be performed precisely. For such reasons, a shape and a size of the protrusion provided to the arm is required to be substantially identical to a shape and a size of the long pocket. **In** this case, however, it becomes difficult to smoothly and accurately fit the protrusion to the long pocket, and hence the phase matching work for the inner joint member and the cage is repeatedly performed. As a result, cycle time required for assembly of the cassette, and in turn, the constant velocity universal joint becomes longer, and thus manufacturing cost of the constant velocity universal joint increases.

Further, in the related-art assembling device and assembling method, the protrusions provided to the arms are required to be fit to the long pockets of the cage when the cassette is nipped by the pair of arms. Thus, it is required that arms having protrusions corresponding to shapes and sizes of long pockets be prepared and stocked, and also that work of replacing the arms be performed every time when the cage forming the cassette is changed. Therefore, there are also problems such as an increase in facility investment due to lack of versatility, difficulty in improving an operation rate of the device.

In view of the actual circumstances described above, a main purpose of the present invention is to provide a technical measure that enables efficient automatic assembly of a constant velocity universal joint (fixed type constant velocity universal joint), which comprises an outer joint member having an undercut shape (spherical inner peripheral surface) as a component, without a need for a large amount of investment.

### Solution to Problem

According to the present invention devised in order to achieve the object described above, there is provided an assembling device for a constant velocity universal joint, the constant velocity universal joint comprising: an outer joint member having a plurality of outer track grooves in a spherical inner peripheral surface; an inner joint member having a plurality of inner track grooves in a spherical outer peripheral surface; a plurality of balls disposed in a freely rolling manner between pairs of the outer track grooves and the inner track grooves; and a cage in which a plurality of pockets that respectively house the balls are provided at intervals in a circumferential direction. The assembling device comprises a phase matching device configured to perform phase matching on a cassette, which is formed of the inner joint member and the cage fit to each other so as to be rotatable relative to each other about a center axis of the inner joint member, to match circumferential positions of the inner track groove and the pocket. The phase matching device comprises a pair of moving bodies configured to synchronously move in directions opposite to each other, and each of the moving bodies is configured to perform slide movement along a direction orthogonal to an axis-parallel plane including the center axis as a reference, under a state in which a distal end portion of each of the moving bodies has been inserted in one pocket.

According to the phase matching device described above, when the pair of moving bodies having the distal end portions inserted in the pocket move synchronously so as to separate from each other with the axis-parallel plane as the reference until the distal end portions respectively abut against an end portion on one side and another end portion on another side of an inner wall surface of the pocket in a circumferential direction, a circumferential center portion of the pocket can be matched with the axis-parallel plane, that is, a movement reference of the pair of moving bodies. Thus, when the circumferential center portion of the inner track groove matches the axis-parallel plane (the movement reference of the pair of moving bodies), phase matching of matching circumferential positions (circumferential center portions) of the inner track grooves and the pockets can be performed. Further, with the pair of moving bodies provided to the phase matching device, the phase matching can be precisely performed without replacing the moving bodies as long as the distal end portion can be inserted, even when a circumferential length of the pocket to which the distal end portion is to be inserted is changed. Accordingly, a cassette in which the circumferential positions of the inner track groove and the pocket have been matched, and thus the phase matching has been completed, and in turn, the fixed type constant velocity universal joint to which the cassette has been incorporated to an inner periphery of the outer joint member can be efficiently obtained without a need for a large amount of investment.

The phase matching device described above can be further provided with a rotation mechanism configured to rotate about the center axis to cause the inner joint member and/or the cage, which forms the cassette, to rotate about the center axis.

In this way, when the rotation mechanism different from the pair of moving bodies is provided, one of the inner joint member or the cage, which forms the cassette, can be independently rotated from another one thereof, and thus, phase matching work can be precisely and efficiently performed.

The phase matching device can be further provided with a measurement part configured to measure a slide movement amount of the moving body with respect to a movement reference. In this case, for example, when a movement amount of the moving body is measured with the measurement part at the time of completion of the phase matching, a circumferential length of the pocket, to which each of the pair of moving bodies has been inserted, can be calculated. Thus, for example, in a case of a cassette using a cage provided with two types of pockets having circumferential lengths different from each other (long pocket and short pocket), it is possible to determine whether a pocket to which the moving body has been inserted is a long pocket or a short pocket, and in turn, whether or not the next work step (for example, a step of inserting a ball to a predetermined pocket) for the cassette, to which the phase matching has been completed, may be performed.

Further, in order to achieve the object described above, according to the present invention, there is provided an assembling method for a constant velocity universal joint, the constant velocity universal joint comprising: an outer joint member having a plurality of outer track grooves in a spherical inner peripheral surface; an inner j oint member having a plurality of inner track grooves in a spherical outer peripheral surface; a plurality of balls disposed in a freely rolling manner between pairs of the outer track grooves and the inner track grooves; and a cage in which a plurality of pockets that respectively house the balls are formed. The assembling method comprises a phase matching step of performing phase matching on a cassette, which is formed of the inner joint member and the cage fit to each other so as to be rotatable relative to each other about a center axis of the inner joint member, to match circumferential positions of the inner track groove and the pocket. In the phase matching step, a pair of moving bodies, which are configured to synchronously move in directions opposite to each other with a distal end portion of each of the moving bodies inserted in one pocket of the cage, are caused to perform slide movement along a direction orthogonal to an axis-parallel plane with the axis-parallel plane including the center axis as a reference.

The assembling method having the configuration described above provides advantageous effects similar to those of the assembling device according to the present invention.

In the phase matching step, a circumferential length of the pocket in which the distal end portion of each of the pair of moving bodies has been inserted can be calculated based on a slide movement amount with respect to a movement reference of the moving body.

### Advantageous Effects of Invention

According to the present invention, as described above, it is possible to efficiently and precisely assemble the cassette, which is a combination of the inner joint member and the cage, without a need for a large amount of investment, the cassette being required in assembling the constant velocity universal joint (fixed type constant velocity universal joint), which comprises the outer joint member having an undercut shape (spherical inner peripheral surface) as a component. In this way, the constant velocity universal joint, which is constructed through the work of incorporating the cassette to an inner periphery of the outer joint member, can be efficiently manufactured at low cost.

### Brief Description of Drawings

FIG. 1A is a longitudinal sectional view of a constant velocity universal joint comprising a cassette obtained by using an assembling device according to an embodiment of the present invention, and is a sectional view taken along the line A-O-A of FIG. 1B.
FIG. 1B is a transverse sectional view of the constant velocity universal joint.
FIG. 2 is a flow chart for illustrating an assembling process (assembling procedure) for the constant velocity universal joint illustrated in FIG. 1A.
FIG. 3 is a partial schematic side view of a phase matching device forming the assembling device for the constant velocity universal joint according to the embodiment of the present invention.
FIG. 4 is a partial schematic plan view of the phase matching device illustrated in FIG. 3.
FIG. 5 is a schematic of a measurement part to be provided to the phase matching device.
FIG. 6A is a partial enlarged view for illustrating an intermediate stage of a phase matching step (phase matching work) performed by the phase matching device.
FIG. 6B is a partial enlarged view for illustrating a stage in which the phase matching in the phase matching step has been completed.
FIG. 7 is a partial perspective view of the phase matching device.
FIG. 8 is a view for illustrating an operating state of a rotation mechanism to be provided to the phase matching device.

### Description of Embodiments

Now, description is made of an embodiment of the present invention with reference to the drawings.

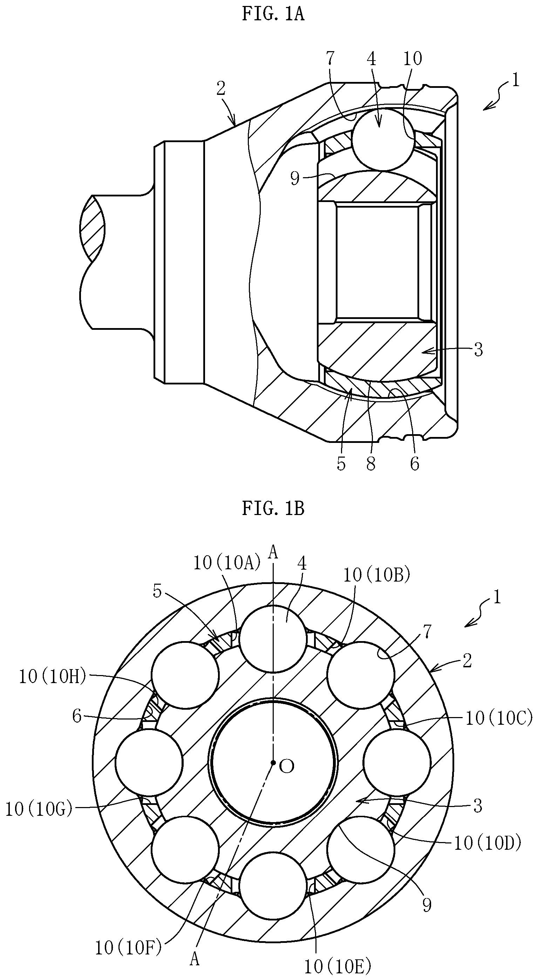

First, one example of a constant velocity universal joint comprising a cassette assembled by using an assembling device and an assembling method according to the present invention is briefly described, based on a longitudinal sectional view (sectional view taken along the line A-O-A of FIG. 1B) in a state of an operating angle of 0° illustrated in FIG. 1A and a transverse sectional view illustrated in FIG. 1B. A constant velocity universal joint 1 illustrated in FIG. 1A and FIG. 1B is a component of a drive shaft that transmits rotational power output from a drive source, such as an engine or an electric motor, mounted on a chassis of an automobile, and is a fixed type constant velocity universal joint (Rzeppa type constant velocity universal joint) that is disposed on a wheel side and allows only angular displacement of two shafts to be coupled to each other.

The constant velocity universal joint 1 comprises an outer joint member 2, an inner joint member 3, a plurality of balls 4, and a cage 5. A plurality of (eight in total) outer track grooves 7 extending in an axial direction are provided on a spherical inner peripheral surface 6 of the outer joint member 2 at intervals in a circumferential direction, and a plurality of inner track grooves 9 extending in an axial direction are provided on a spherical outer peripheral surface 8 of the inner joint member 3 at intervals in a circumferential direction. The balls 4 are arranged in a freely rolling manner on ball tracks formed between the outer track grooves 7 and the inner track grooves 9, which are opposed to each other. The cage 5 comprises: a spherical outer peripheral surface that fits to the spherical inner peripheral surface 6 of the outer joint member 2; and a spherical inner peripheral surface that fits to the spherical outer peripheral surface 8 of the inner joint member 3, and a plurality of (eight in total) pockets 10 that respectively hold the balls 4 are provided to the cage 5 at intervals in a circumferential direction.

The eight pockets 10 (10A to 10H) in total provided to the cage 5 comprise two types of the pockets (long pocket and short pocket) having circumferential lengths (opening dimensions in the circumferential direction) different from each other. In FIG. 1B, the long pockets and the short pockets are alternately provided in the circumferential direction. Here, the pockets 10A, 10C, 10E, and 10G are set as the long pockets, and the pockets 10B, 10D, 10F, and 10H are set as the short pockets having a circumferential length shorter than that of the long pockets. A circumferential length difference between the long pocket and the short pocket is small, for example, about 1 mm or less.

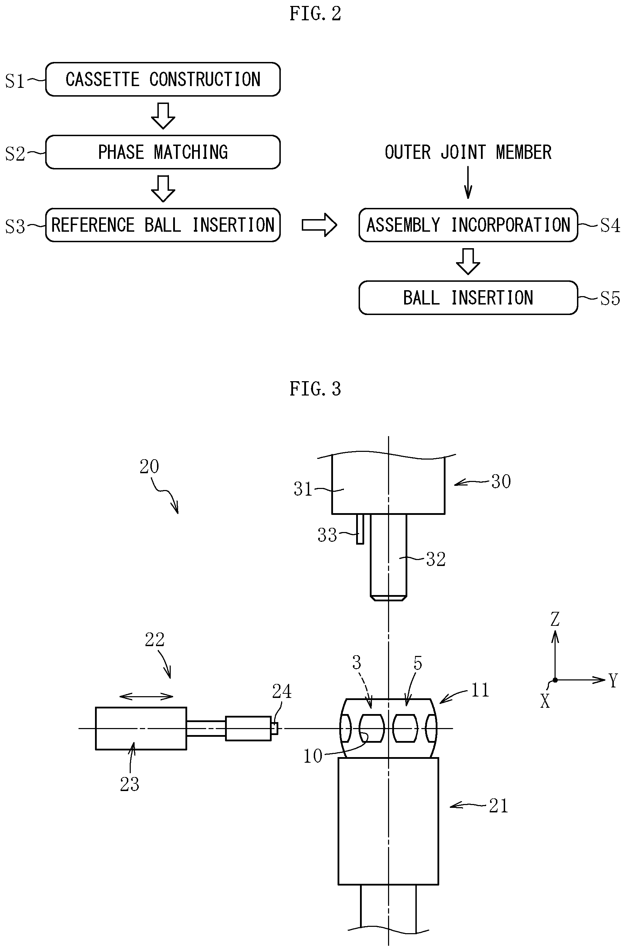

As illustrated in FIG. 2, the constant velocity universal joint 1 having the configuration described above is assembled through a cassette construction step S1, a phase matching step S2, a reference ball insertion step S3, an assembly incorporation step S4, and a ball insertion step S5 which are performed in the stated order. After that, an acceptable product which has passed quality inspection performed in an inspection step (not shown) is transferred to a post-process. The assembling method for the constant velocity universal joint according to the embodiment of present invention is characterized mainly in the phase matching step S2 among the steps S1 to S5 described above. Therefore, in the following, each of the steps excluding the phase matching step S2 is briefly described first, and then the phase matching step S2 is described in detail.

### [Cassette Construction Step S1]

In the step S1, the spherical outer peripheral surface 8 of the inner joint member 3 is fit to the spherical inner peripheral surface of the cage 5 so that a cassette 11, in which the inner joint member 3 and the cage 5 are fit to each other so as to be rotatable relatively to each other about the center axis of the inner joint member 3, is constructed.

### [Reference Ball Insertion Step S3]

In the step S3, the ball 4 (reference ball 4) is inserted into one pocket 10 among the eight pockets 10 (10A to 10H) in total provided to the cage 5 of the cassette 11 to which the phase matching has been performed in the phase matching step S2 described later (see FIG. 3 and the like). In this way, an assembly, which comprises the inner joint member 3, the cage 5, and one reference ball 4, and in which relative rotation of the inner joint member 3 and the cage 5 is restricted by this reference ball 4, is prepared.

The reference ball 4 is automatically inserted into a predetermined pocket 10 (here, any one of the long pockets 10A, 10C, 10E, and 10G) by using a ball insertion machine (not shown). The ball insertion machine is arranged, after the phase matching has been completed, on a radially outer side of the cassette 11 (at an insertion position in which the ball 4 can be inserted into the pocket 10) in a way by replacing a first rotation mechanism 22 that forms a phase matching device 20 described later, and performs ball insertion work with respect to the pocket 10. When the ball insertion work is completed, the ball insertion machine moves to a retreat position in which the ball 4 cannot be inserted to the pocket 10, in a way by replacing the first rotation mechanism 22.

### [Assembly Incorporation Step S4]

In the step S4, the assembly is incorporated to (a cup portion of) the inner periphery of the outer joint member 2, which is prepared separately. Although not shown, incorporation of the assembly to the inner periphery of the outer joint member 2 is performed in a manner similar to that in the aspects illustrated in FIG. 2 to FIG. 4 of Patent Literature 1.

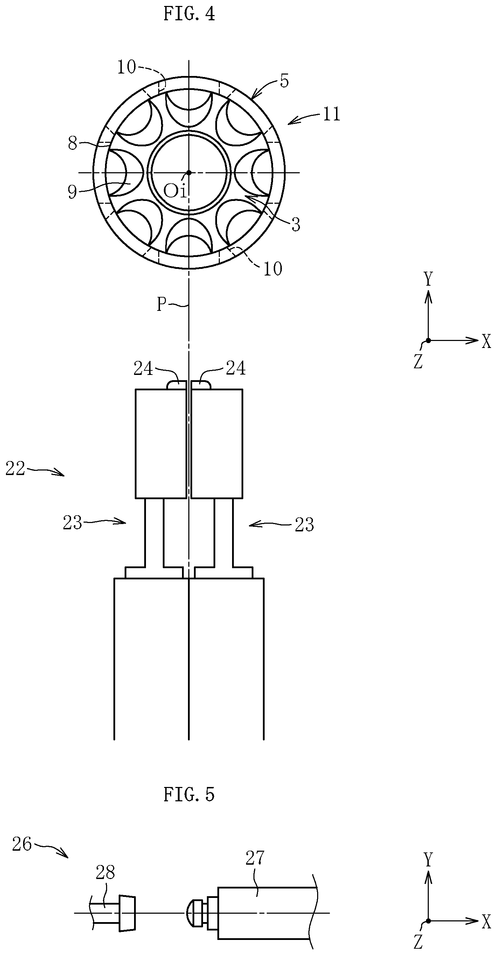

That is, the assembly is inserted to the inner periphery of the outer joint member 2 under a state in which the center axis (center axis Oi of the inner joint member 3, see FIG. 4) of the assembly is orthogonal to the center axis of the outer joint member 2, and the reference ball 4 is arranged outside the outer joint member 2 (see FIG. 2 of Patent Literature 1). At the start of insertion of the assembly, two pockets 10 (pockets 10C and 10G that are the long pockets, for example) opposed to each other across the center axis of the assembly are fit to the spherical inner peripheral surface 6 (convex portion provided between two outer track grooves 7 and 7 adjacent to each other in circumferential direction) of the outer joint member 2 (see FIG. 3 of Patent Literature 1). In this way, interference between the outer joint member 2 and the cage 5 can be avoided.

When a part of the assembly is inserted to the inner periphery of the outer joint member 2, the assembly is rotated about the center axis of the outer joint member 2 so that circumferential positions of the pocket 10 of the cage 5 and the outer track groove 7 are matched while the spherical inner peripheral surface 6 of the outer joint member 2 and the spherical outer peripheral surface of the cage 5 are fit to each other (see FIG .4 of Patent Literature 1). Subsequently, when the assembly is rotated by 90° about an axis extending in a radial direction of the outer joint member 2, the assembly is incorporated to the inner periphery of the outer joint member 2 under a state in which the center axis of the assembly is matched with the center axis of the outer joint member 2.

### [Ball Insertion Step S5]

In the step S5, the balls 4 are inserted one by one into the pockets 10B to 10H, excluding the long pocket 10A into which reference ball 4 has been inserted, among the pockets 10 (10A to 10H) of the cage 5 incorporated to the inner periphery of the outer joint member 2. The balls 4 are inserted into the pockets 10B to 10H in a predetermined order. As for an example, specific order is such that the balls 4 are inserted in the order of the short pocket 10F, the long pocket 10C, the long pocket 10G, the long pocket 10E, the short pocket 10B, the short pocket 10D, and the short pocket 10H. At the time of inserting the balls 4 into the pockets 10B to 10H, the cassette 11 (the inner joint member 3 and the cage 5) is angularly displaced with respect to the outer joint member 2 so that the pocket subjected to the insertion of the ball is exposed to the outside of the outer joint member 2.

Now, the phase matching step S2 is described with reference to FIG. 3 to FIG. 8. In the phase matching step S2, the phase matching work of rotating the inner joint member 3 and the cage 5 relative to each other about the center axis Oi of the inner joint member 3 to match circumferential positions of the circumferential center portion of the inner track groove 9 and the circumferential center portion of the pocket 10 is performed on the cassette 11 constructed in the cassette construction step S1. This phase matching work can be automatically performed by using the phase matching device 20, illustrated in FIG. 3 and the like, according to the embodiment of the present invention.

FIG. 3 and FIG. 4 show a partial schematic side view and a partial schematic plan view of the phase matching device 20, respectively. The phase matching device 20 comprises a support member 21 that supports the cassette 11 from below, a first rotation mechanism 22 that slightly rotates, about the center axis Oi of the inner joint member 3, the cage 5 of the cassette 11 supported by the support member 21, a second rotation mechanism 30 that rotates, about the center axis Oi, the inner j oint member 3 or the cage 5 of the cassette 11 supported by the support member 21. The second rotation mechanism 30 corresponds to "rotation mechanism" in the claim, in terms of the function thereof.

The support member 21 supports, from below, the cassette 11 being horizontally placed with the center axis Oi of the inner joint member 3 extending along a vertical direction (arrow Z direction illustrated in FIG. 3 and the like). The support member 21 moves up and down by receiving driving force from a drive mechanism (not shown).

As illustrated in FIG. 3 and FIG. 4, the first rotation mechanism 22 is entirely arranged on a radially outer side of the cassette 11. The rotation mechanism 22 comprises a pair of moving bodies 23 and 23 that synchronously move in directions opposite to each other. Each moving body 23 performs, with an axis-parallel plane (vertical plane) P, as a reference, which includes the center axis Oi, slide movement along a horizontal direction orthogonal to the vertical plane P (arrow X direction illustrated in FIG. 3 and the like). In addition, the pair of moving bodies 23 and 23 can perform slide movement in a horizontal direction along the vertical plane P (arrow Y direction illustrated in FIG. 3 and the like), that is, in directions of moving closer to and away from the cassette 11. A distal end portion of each moving body 23 is provided with a protrusion 24 that can be inserted into the pocket 10 of the cage 5.

The first rotation mechanism 22 comprises a measurement part 26 as illustrated in FIG. 5. The measurement part 26 is configured to measure a slide movement amount of the moving body 23 (any one of the pair of moving bodies 23 and 23) with respect to a movement reference. A measurement part that comprises a sensor body 27 attached to a stationary side member (for example, structure) (not shown) of the phase matching device 20 and a terminal 28 attached to any one of the pair of moving bodies 23 and 23 is used as the measurement part 26. In such a case, for example, when each moving body 23 performs slide movement in directions opposite to each other so as to increase a separation distance with respect to a counterpart moving body 23 from the movement reference in which the moving body 23 is abutting against the counterpart moving body 23 on the vertical plane P (see FIG. 4), a movement amount of the terminal 28 attached to one of moving body 23 is measured by the sensor body 27. Thus, when this measured value is doubled, a separation distance between the pair of moving bodies 23 and 23, and in turn, a circumferential length of the pocket 10 into which the protrusions 24 and 24 have been inserted can be calculated.

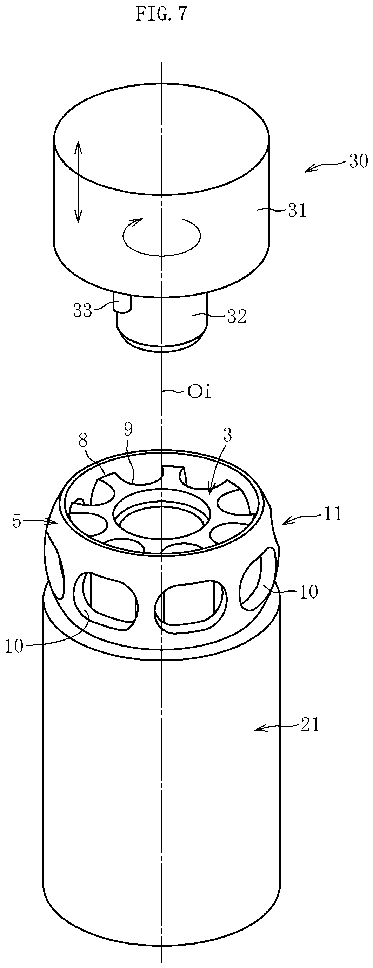

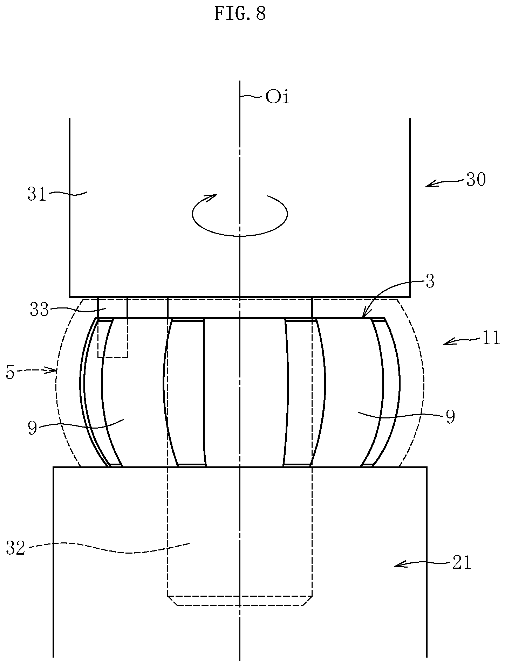

As illustrated in FIG. 7 and FIG. 8, the second rotation mechanism 30 comprises a rotation head 31 that is arranged in coaxial with the support member 21, and is driven to rotate about the center axis of the support member 21 by receiving output from a rotation drive source such as a servo motor (not shown), that is, about the center axis Oi of the inner joint member 3 of the cassette 11 supported by the support member 21. The rotation head 31 comprises: a positioning pin 32 that is arranged in coaxial with the support member 21 and can be inserted into a shaft hole of the inner joint member 3; and one engagement pin 33 that is arranged on a radially outer side of the positioning pin 32 and can be inserted into the inner track groove 9 of the inner joint member 3. The rotation head 31 entirely moves up and down by receiving driving force from the drive mechanism (not shown).

The phase matching device 20 generally comprises the configuration as described above, and performs the phase matching work of matching the circumferential positions of the circumferential center portion of the inner track groove 9 and the circumferential center portion of the pocket 10 as described below.

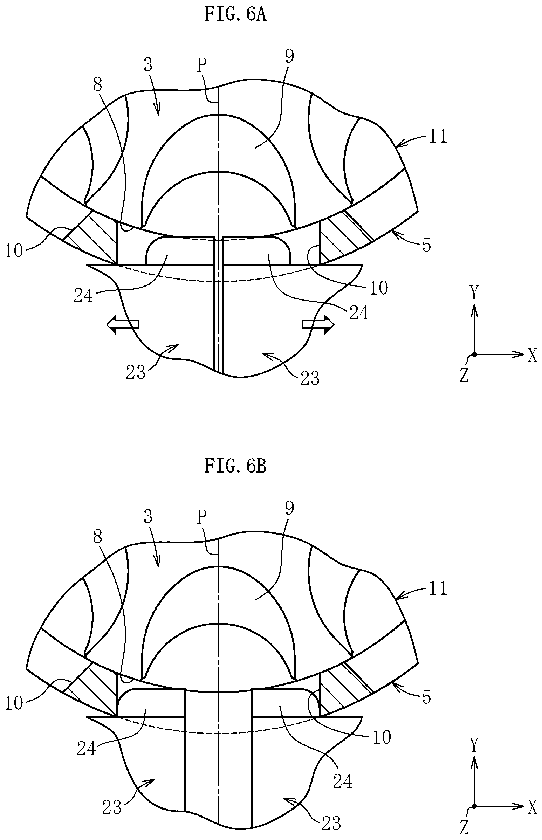

First, the cassette 11 constructed in the cassette construction step S1 is set on the support member 21 in a state of being horizontally placed with the center axis Oi of the inner joint member 3 extending along a vertical direction, and the first rotation mechanism 22 (the pair of moving bodies 23 and 23) is moved closer to the cassette 11, and then the protrusion 24 provided to the distal end portion of each moving body 23 is inserted into the pocket 10 of cage 5 (see FIG. 6A).

At this time, the cassette 11 is positioned on the support member 21 by inserting the positioning pin 32 of the rotation head 31 into the shaft hole of the inner joint member 3. In addition, the cassette 11 is nipped by the rotation head 31 and the support member 21 by abutting the rotation head 31 against the cage 5 of the cassette 11. Although illustration is omitted, a thrust bearing that can rotate the support member 21 about the center axis Oi

(vertical axis) is incorporated in the support member 21. Thus, the cage 5 of the cassette 11 can rotate about the vertical axis together with the thrust bearing (and the support member 21), even in a state of being nipped by the support member 21 and the rotation head 31. With this configuration, the cage 5 can rotate about the vertical axis not only in a case in which the moving body 23 comprising the protrusion 24 inserted into the pocket 10 operates in a mode described below, but also in a case in which the rotation head 31 rotates. Thus, in a case in which, for example, the pocket 10 is misaligned with respect to the protrusion 24 in the circumferential direction, and hence the protrusion 24 cannot be inserted into the pocket 10, the pocket 10 of the cage 5 can be arranged at a position in which the protrusion 24 can be inserted, by driving the rotation head 31 to rotate and thus rotating the cage 5. Therefore, an insertion work of the protrusion 24 into the pocket 10 (moving the pair of moving bodies 23 and 23 closer to the cassette 11) is preferably performed while driving the rotation head 31 to rotate.

When the protrusions 24 and 24 are inserted into the pocket 10 of the cage 5, each moving body 23 performs slide movement in a horizontal direction (arrow X direction) that is orthogonal to the vertical plane P so as to increase the separation distance with respect to the counterpart moving body 23 [see the solid arrow in FIG. 6A]. Then, when one of the protrusions 24 abuts against one end portion of the pocket 10 in the circumferential direction, and also another one of the protrusion 24 abuts against another end portion of the pocket 10 in the circumferential direction, the slide movement of the pair of moving bodies 23 and 23 is stopped.

With (the cage 5 of) the cassette 11 being supported in the mode described above, the cage 5 rotates (slightly rotates) about the vertical axis by receiving slide movement force from the protrusions 24 until the protrusions 24 provided to the pair of moving bodies 23 respectively abut against one end portion and another end portion of the pocket 10 in the circumferential direction, and when the protrusions 24 respectively abut against one end portion and another end portion of the pocket 10 in the circumferential direction, the circumferential position of the circumferential center portion of the pocket 10 of the cage 5 matches the vertical plane P that includes the center axis Oi of the inner joint member 3. In this way, a first phase matching work of matching the circumferential position of the circumferential center portion of the pocket 10 with the vertical plane P is completed. In addition, a separation distance between the pair of moving bodies 23 and 23 is measured by the measurement part 26 at this time, and thus a circumferential length of each of the pockets 10, to which the protrusions 24 and 24 have been inserted, is measured and calculated. Then, when the circumferential length of the pocket 10 that has been measured and calculated is determined to be the circumferential length of the long pocket by a determination part (not shown), a second phase matching work of matching the circumferential positions of the circumferential center portion of the pocket 10 and the circumferential center portion of the inner track groove 9 is performed (details are described later).

Meanwhile, when the circumferential length of the pocket 10 that has been measured and calculated is determined to be the circumferential length of the short pocket, the rotation head 31 rotates by a predetermined amount (here, 45°corresponding to 1/10 pitch of the pocket 10) under a state of nipping the cage 5 of the cassette 11 between the rotation head 31 and the support member 21, and thus the cage 5 (and the inner joint member 3) rotates to arrange a pocket 10 adjacent to the pocket 10, to which the protrusions 24 and 24 have been inserted previously, on the vertical plane P. Then, with the operation of the first rotation mechanism 22 in the same manner as that described above, the first phase matching work of matching the circumferential position of the circumferential center portion of the pocket 10 with the vertical plane P is performed, and a circumferential length of the pocket 10 is measured (whether the pocket 10 is the long pocket or the short pocket is determined). The cage 5 in this embodiment is configured such that the long pockets and the short pockets are alternately provided in the circumferential direction, and thus the pocket 10 described above is inevitably the long pocket.

The second phase matching work is performed as described below. First, the rotation head 31 and/or the support member 21 is moved up and down, and the rotation head 31 is rotated as required, and thus the engagement pin 33 provided to the rotation head 31 is inserted into the track groove 9 of the inner joint member 3, without nipping the cage 5 of the cassette 11 by the support member 21 and the rotation head 31 (see FIG. 8). When the rotation head 31 is driven to rotate under this state, that is, a state in which a slight gap is provided between the rotation head 31 and the cage 5 and thus the cage 5 is not nipped by the rotation head 31 and the support member 21, the engagement pin 33 and the inner joint member 3 engage with each other in a rotation direction of the rotation head 31, and on the other hand, rotation force of the rotation head 31 is not transmitted to the cage 5. Thus, only the inner joint member 3 receives the rotation force of the rotation head 31 and rotates about the center axis Oi. As illustrated in FIG. 6B, a rotation amount of the rotation head 31 is controlled such that the circumferential center portion of the inner track groove 9 is located on the vertical plane P. In this way, the second phase matching work of matching the circumferential positions of the circumferential center portion of the pocket 10 and the circumferential center portion of the inner track groove 9, that is, the phase matching step S2 is completed.

When the phase matching is completed in this way, the ball insertion machine is arranged on the radially outer side of the cassette 11 in a way by replacing the first rotation mechanism 22, and this ball insertion machine inserts the reference ball 4 into the pocket 10 of the cassette 11 supported by the support member 21, as described above.

According to the phase matching device 20 in this embodiment described above, when (the protrusions 24 provided to the distal end portions of) the pair of moving bodies 23 inserted into the pocket 10 are synchronously moved so as to separate from each other with the vertical plane P as the reference until the pair of moving bodies 23 respectively abut against the end portion on one side and to the end portion on another side in the circumferential direction of the inner surface of the pocket 10, a circumferential center portion of the pocket 10 can be matched with vertical plane P, that is, a movement reference of the pair of moving bodies 23. Thus, the phase matching of matching the circumferential positions of the inner track groove 9 and the pocket 10 can be performed by matching the circumferential center portion of the inner track groove 9 with the vertical plane P. Further, with the pair of moving bodies 23 and 23, the phase matching can be precisely performed without replacing the moving bodies as long as the protrusion 24 provided to the distal end portion of each moving body 23 can be inserted, even when a circumferential length of the pocket 10 to which the moving bodies 23 is to be inserted is changed.

In addition, the phase matching device 20 is provided with a rotation head 31, as the rotation mechanism (second rotation mechanism 30), configured to rotate about the center axis Oi of the inner joint member 3 of the cassette 11 supported by the support member 21 to cause the inner joint member 3 or the cage 5, which forms the cassette 11, to rotate about the center axis thereof. In this way, when the rotation mechanism different from the pair of moving bodies 23 (first rotation mechanism 22) is provided, one of the inner joint member 3 or the cage 5, which forms the cassette 11, can be rotated independently from another one thereof, and thus, a phase matching work for the inner joint member 3 and the cage 5 can be precisely and efficiently performed.

The phase matching device 20 in this embodiment is further provided with a measurement part 26 configured to measure a slide movement amount of the moving body 23 with respect to a movement reference (a slide movement amount in a horizontal direction orthogonal to the vertical plane P). In this case, for example, a circumferential length of the pocket 10, to which the pair of moving bodies 23 have been inserted, can be calculated, by measuring a movement amount of the moving body 23 with the measurement part 26 at the time when the phase matching is completed. Thus, as described above, in a case of the cassette 11 using the cage 5 provided with the long pocket and the short pocket having circumferential lengths different from each other, it is possible to precisely determine whether a pocket 10 to which the moving body 23 (the protrusion 24 provided thereon) has been inserted is the long pocket or the short pocket, and in turn, whether or not the next work step (reference ball insertion step S3) for the cassette 11, to which the phase matching has been completed, may be performed.

To summarize the foregoing, with the phase matching device 20 (the phase matching method) in this embodiment, the cassette 11 completed with the phase matching, in which the circumferential positions of the circumferential center portion of the inner track groove 9 and the circumferential center portion of the pocket 10 are matched, can be efficiently constructed, without a need for a large amount of investment. Thus, the constant velocity universal joint 1 in which the cassette 11 (and the plurality of balls 4) is incorporated to the inner periphery of the outer joint member 2 can be efficiently constructed at low cost.

One embodiment of the present invention has been described above, but embodiments of the present invention are not limited thereto.

The phase matching device 20 in the embodiment of the present invention has been described, for example, as a case of using the phase matching device 20 in assembling the constant velocity universal joint 1 comprising, as a component, the cage 5 comprising two types of pockets (long pocket and short pocket) having different circumferential lengths. However, the phase matching device 20 can efficiently perform the phase matching work of matching the circumferential positions of the inner track groove 9 provided to the inner joint member 3 and the pocket 10 provided to the cage 5, the phase matching device 20 can also be used in assembling the constant velocity universal joint 1 comprising, as a component, the cage 5 in which all the pockets are formed equally in circumferential length.

The present invention is not limited to the above-mentioned embodiment. The present invention may be carried out in various modes without departing from the spirit of the present invention. The scope of the present invention is defined in claims, and encompasses equivalents described in claims and all changes within the scope of claims.

### Reference Signs List

- 1: constant velocity universal joint (fixed type constant velocity universal joint)
- 2: outer joint member
- 3: inner joint member
- 4: ball
- 5: cage
- 7: outer track groove
- 9: inner track groove
- 10: pocket
- 11: cassette
- 21: support member
- 22: first rotation mechanism
- 23: moving body
- 24: protrusion
- 26: measurement part
- 30: second rotation mechanism (rotation mechanism)
- 31: rotation head
- 32: positioning pin
- 33: engagement pin
- Oi: center axis of inner joint member
- P: axis-parallel plane

## Claims

1. An assembling device for a constant velocity universal joint, the constant velocity universal joint comprising: an outer joint member having a plurality of outer track grooves in a spherical inner peripheral surface; an inner joint member having a plurality of inner track grooves in a spherical outer peripheral surface; a plurality of balls disposed in a freely rolling manner between pairs of the outer track grooves and the inner track grooves; and a cage in which a plurality of pockets that respectively house the balls are formed,
the assembling device comprising a phase matching device configured to perform phase matching on a cassette, which is formed of the inner joint member and the cage fit to each other so as to be rotatable relative to each other about a center axis of the inner joint member, to match circumferential positions of the inner track groove and the pocket,
wherein the phase matching device comprises a pair of moving bodies configured to synchronously move in directions opposite to each other, and each of the moving bodies is configured to perform slide movement in a direction orthogonal to an axis-parallel plane including the center axis as a reference, under a state in which a distal end portion of each of the moving bodies has been inserted in one pocket of the cage.

2. The assembling device for a constant velocity universal joint according to claim 1, wherein the phase matching device further comprises a rotation mechanism configured to rotate about the center axis to cause the inner joint member and/or the cage to rotate about the center axis.

3. The assembling device for a constant velocity universal joint according to claim 1 or 2, wherein the phase matching device further comprises a measurement part configured to measure a slide movement amount of the moving body with respect to a movement reference.

4. An assembling method for a constant velocity universal joint, the constant velocity universal joint comprising: an outer joint member having a plurality of outer track grooves in a spherical inner peripheral surface; an inner joint member having a plurality of inner track grooves in a spherical outer peripheral surface; a plurality of balls disposed in a freely rolling manner between pairs of the outer track grooves and the inner track grooves; and a cage in which a plurality of pockets that respectively house the balls are formed,
the assembling method comprising a phase matching step of performing phase matching on a cassette, which is formed of the inner joint member and the cage fit to each other so as to be rotatable relative to each other about a center axis of the inner joint member, to match circumferential positions of the inner track groove and the pocket,
wherein, in the phase matching step, a pair of moving bodies, which are configured to synchronously move in directions opposite to each other with a distal end portion of each of the moving bodies inserted in one pocket of the cage, are caused to perform slide movement along a direction orthogonal to an axis-parallel plane with the axis-parallel plane including the center axis as a reference.

5. The assembling method for the constant velocity universal joint according to claim 4, wherein, in the phase matching step, a circumferential length of the pocket in which the distal end portion of each of the pair of moving bodies has been inserted is calculated based on a slide movement amount with respect to a movement reference of the moving body.
